# EUROPÄISCHE PATENTSCHRIFT

(11) **EP 3 881 738 B1**
(45) Veröffentlichungstag und Bekanntmachung des Hinweises auf die Patenterteilung: **17.07.2024**
(21) Anmeldenummer: 20163983.8
(22) Anmeldetag: 18.03.2020
(51) Int. Cl.: A47K 5/12, G01D 18/00, G01F 25/00

(54) **VERFAHREN ZUM KALIBRIEREN EINER AUSGABEMENGE EINES SPENDERS**
METHOD FOR CALIBRATING AN OUTPUT QUANTITY OF A DISPENSER
PROCÉDÉ D'ÉTALONNAGE D'UNE QUANTITÉ PROVENANT D'UN DISTRIBUTEUR

(43) Veröffentlichungstag der Anmeldung: 22.09.2021
(73) Patentinhaber: Hagleitner, Hans Georg, 5700 Zell am See (AT)
(72) Erfinder: Hagleitner, Hans Georg, 5700 Zell am See (AT)
(74) Vertreter: Margotti, Herwig Franz

(56) Entgegenhaltungen:
- US-A1- 2013 200 097
- US-A1- 2014 375 457
- US-A1- 2016 216 714
- US-A1- 2018 141 064
- US-A1- 2019 133 384

## Beschreibung

Die Erfindung betrifft ein Verfahren, gemäß Anspruch 1, zum Kalibrieren einer Ausgabemenge eines Spenders, wobei der Spender nach einer Betätigung ein Hygienefluid, bevorzugt ein Desinfektionsmittel, mit der genannten Ausgabemenge ausgibt und der Mittel umfasst, die dazu ausgebildet sind, die Ausgabemenge zu verändern. Die Erfindung betrifft weiterhin ein System, gemäß Anspruch 10, bestehend aus Spender und Kalibriervorrichtung.

Aus dem Stand der Technik sind Spender für Hygienefluid bekannt, beispielsweise Desinfektionsmittel, Seife oder Schaumseife, die nach einer Betätigung eine diskrete Menge des Hygienefluids ausgeben. Beispielsweise kann der Spender mittels eines Handschalters oder eines Bewegungssensors betätigt werden, um das Hygienefluid aus einer Austrittsöffnung des Spenders auszugeben. Durch die diskrete Menge an Hygienefluid kann dieses vorportioniert werden, um die Menge an den jeweiligen Einsatzzweck anzupassen. Derartige Spender werden einerseits in öffentlichen Gebäuden wie Krankenhäusern, Schulen, Bahnhöfen oder dergleichen eingesetzt, können andererseits aber auch in privaten Haushalten zum Einsatz kommen.

Ein Beispiel für einen Spender wird in der US2016216714A1 offenbart. In diesem Dokument wird ein Spender für Seife oder andere Hygienefluide offenbart, dessen Ausgabemenge mittels eines Smartphones eingestellt werden kann. Hierzu wird auf dem Smartphone eine speziell ausgebildete App vorgesehen.

Ein weiteres Beispiel für einen bekannten Spender wird in der US2018141064A1 offenbart. In diesem Dokument wird eine Vorrichtung zur Ausgabe von Seifenschaum gezeigt, wobei die Ausgabemenge an Seifenschaum gemessen werden kann, indem der Seifenschaum in einen Messbecher ausgegeben wird.

Auch die Dokument US2014375457A1, US2019133384A1, und US2013200097A1 offenbaren Spender, die dazu ausgebildet sind, Seifenschaum bzw. andere Fluide auszugeben.

Es hat sich jedoch gezeigt, dass die Spender wie andere Gebrauchsgegenstände einer gewissen Abnutzung unterliegen und dass sich insbesondere die Ausgabemenge der Spender mit der Zeit verändert. Eine zu hohe Ausgabemenge bewirkt, dass mehr Hygienefluid als benötigt verbraucht wird, was eine unnötige finanzielle und ökologische Belastung mit sich bringt. Eine zu niedrige Ausgabemenge bewirkt, dass das Hygienefluid nicht seine volle Wirksamkeit entfalten kann.

Eine Veränderung der Ausgabemenge kann beispielsweise durch Verstopfungen im Spender auftreten, insbesondere durch Ablagerungen an der Austrittsöffnung des Spenders, sodass die Ausgabemenge mit der Zeit abnimmt. In anderen Fällen kann es aufgrund von Abnutzungserscheinungen jedoch auch dazu kommen, dass die Ausgabemenge mit der Zeit zunimmt.

Ein weiteres Problem hinsichtlich der Ausgabemenge ist durch Abweichungen von Fertigungstoleranzen bedingt. Wird beispielsweise eine Vielzahl von Spendern in einem öffentlichen Gebäude montiert, ist selbst bei neuen Spendern nicht sichergestellt, dass alle Spender dieselbe Menge an Hygienefluid ausgeben.

In der Praxis werden Spender häufig entsorgt oder müssen aufwändig gewartet werden, wenn diese eine irreguläres Ausgabemenge ausgeben. Zwar sind aus dem Stand der Technik Spender bekannt, bei denen sich die Ausgabemenge manuell zwischen diskreten Werten einstellen lässt, beispielsweise von 0,8 ml, 1,0 ml oder 1,2 ml, was jedoch nicht das grundsätzliche Problem von Fehljustierungen behebt. Zudem ist es insbesondere für Spender im öffentlichen Bereich oft nicht erwünscht, dass die Ausgabemenge des Spenders frei verstellbar ist. Selbst wenn bei diesen Spendern somit eine Adjustiermöglichkeit der Ausgabemenge vorgesehen sein sollte, müsste diese im Inneren des Spenders und nur mittels eines Schlüssels zugänglich sein, um ein unbefugtes Verändern der Ausgabemenge des Spenders zu verhindern.

Es ist somit das Ziel der Erfindung, sowohl ein Verfahren zum Kalibrieren einer Ausgabemenge eines Spenders als auch einen zugehörigen Spender und eine Kalibriervorrichtung bereitzustellen, die die Nachteile des Standes der Technik überwinden. Insbesondere sollen das Verfahren, der Spender und die Kalibriervorrichtung ermöglichen, dass die Ausgabemenge des Spenders einfach, aber nicht unmittelbar zugänglich kalibriert werden kann.

In einem ersten Aspekt der Erfindung wird dieses Ziel durch ein Verfahren zum Kalibrieren einer Ausgabemenge eines Spenders erreicht, wobei der Spender nach einer Betätigung ein Hygienefluid, bevorzugt ein Desinfektionsmittel, mit der genannten Ausgabemenge ausgibt und Mittel umfasst, die dazu ausgebildet sind, die Ausgabemenge zu verändern, wobei das Verfahren die folgenden Schritte umfasst:
- Ausgeben der Ausgabemenge an Hygienefluid aus dem Spender in einen Messbehälter;
- Messen der im Messbehälter befindlichen Menge des Hygienefluids, bevorzugt durch Messen des Volumens des Hygienefluids im Messbehälter oder der Masse des Hygienefluids im Messbehälter;
- Eingeben der gemessenen Menge in eine Kalibriervorrichtung;
- Vergleichen in der Kalibriervorrichtung, ob die gemessene Menge mit einer Referenzmenge übereinstimmt, und Ermitteln eines Kalibrierwertes, wenn die gemessene Menge nicht mit der Referenzmenge übereinstimmt;
- Senden des Kalibrierwertes von der Kalibriervorrichtung an den Spender; und
- Hinterlegen des Kalibrierwertes im Spender, wobei die genannten Mittel den Kalibrierwert bei der weiteren Ausgabe des Hygienefluids anwenden, um die Ausgabemenge des Spenders einzustellen.

Gemäß dem erfindungsgemäßen Verfahren wird somit zuerst die tatsächlich ausgegebene Ausgabemenge des Spenders gemessen und diese danach in eine Kalibriervorrichtung eingegeben. Die Kalibriervorrichtung erfüllt die Aufgabe, die gemessene Ausgabemenge mit einer Referenzmenge zu vergleichen und aus der Abweichung einen Kalibrierwert zu ermitteln. Die Ermittlung des Kalibrierwerts mittels der Kalibriervorrichtung ermöglicht, dass der Kalibrierwert nach nur einer Messung ermittelt werden kann, sodass kein Trial-and-Error-Verfahren zum Einsatz kommen muss, wodurch beim Kalibriervorgang Zeit und Hygienefluid eingespart werden kann.

Nachdem die Kalibriervorrichtung den Kalibrierwert ermittelt hat, wird dieser von der Kalibriervorrichtung an den Spender gesendet, sodass insbesondere auf eine manuelle Eingabe des Kalibrierwerts, beispielsweise durch ein Verstellen einer Adjustiermechanik des Spenders, verzichtet werden kann. Dies ist insbesondere von Vorteil, wenn eine Vielzahl von Spendern kalibriert werden soll, was häufig bei Wartungsarbeiten in öffentlichen Gebäuden der Fall ist.

Das Messen der Menge an Hygienefluid im Messbehälter kann dadurch erfolgen, dass das Volumen oder die Masse des ausgegebenen Hygienefluids im Messbehälter gemessen wird. Beispielsweise kann der Messbehälter zur Bestimmung des Volumens eine optische Anzeige wie Markierungen umfassen. Auch könnte zur Bestimmung der Masse eine Waage eingesetzt werden.

In einer bevorzugten Ausführungsform ist die Kalibriervorrichtung durch die Kombination aus einem Mobiltelefon und einer Applikation gebildet, wobei die Applikation die Schritte des Vergleichens und Sendens durchführt. Diese Ausführungsform ist besonders vorteilhaft, da die Applikation von der Person, die die Messung bzw. Kalibrierung durchführt, frei heruntergeladen werden kann, wodurch die Kalibriervorrichtung durch einfache Mittel bereitgestellt werden kann. Die Applikation kann zudem eine Verifizierung der Person erfordern, sodass der Spender nicht von jeder Person adjustiert werden kann.

Bevorzugt ist in der Kalibriervorrichtung eine Adresse des Spenders gespeichert, an die der Kalibrierwert versandt wird. Der Benutzer der Kalibriervorrichtung kann beispielsweise vor einer Kalibrierung die Adresse bzw. einen Namen oder Code des Spenders in der Kalibriervorrichtung, beispielsweise in der genannten Applikation, auswählen, und den Messwert in Verknüpfung zu diesem speichern. Vorteilhaft ist hierbei insbesondere, dass der Benutzer die Adresse des Spenders nicht manuell eingeben muss.

Zusätzlich oder alternativ zu der vorgenannten Ausführungsform kann die Kalibriervorrichtung die Adresse des Spenders, an welche der Kalibrierwert versandt werden soll, vom Spender auslesen. Dadurch muss der Benutzer die Adresse bzw. einen Namen oder Code des Spenders nicht selbst auswählen, wodurch Fehler vermieden werden. Werden beide Möglichkeiten eingesetzt, kann dadurch eine Verifizierung stattfinden, sodass der richtige Spender kalibriert wird.

In den vorgenannten Ausführungsformen kann der Kalibrierwert bevorzugt unmittelbar nach der Eingabe der gemessenen Ausgabemenge ermittelt und an den Spender gesandt werden, insbesondere wenn der Spender eine Kurzreichweitenkommunikation mit der Kalibriervorrichtung ermöglicht. Alternativ können beispielsweise zuerst viele gemessene Ausgabemengen in der Kalibriervorrichtung gespeichert werden, woraufhin in einem Schritt Kalibrierwerte im Wesentlichen gleichzeitig berechnet und an eine Vielzahl von Spendern gesandt werden.

Bevorzugt kann das Verändern der Ausgabemenge durch Erhöhen oder Reduzieren der Ausgabezeit des Hygienefluids aus dem Spender gemäß dem Kalibrierwert erfolgen. In dieser Ausführungsform kann der Spender beispielsweise einen Speicher umfassen, in dem die aktuelle Ausgabezeit gespeichert ist. Der Kalibrierwert kann ein Faktor zur Erhöhung oder Reduktion der gespeicherten Ausgabezeit sein oder eine neue Ausgabezeit angeben. Dies hat den Vorteil, dass der Spender mechanisch besonders einfach ausgebildet werden kann.

Eine Möglichkeit zur Kopplung der Kalibriervorrichtung an den Spender zur Übertragung des Kalibrierwertes ist, den Spender mittels eine Kabels, beispielsweise eines USB-Kabels, mit der Kalibriervorrichtung zu verbinden. Bevorzugt ist jedoch, wenn der Kalibrierwert kabellos von der Kalibriervorrichtung an den Spender übertragen wird. Die Kommunikation zwischen Spender und Kalibriervorrichtung erfolgt bevorzugt über eine Kurzreichweitenkommunikation, beispielsweise gemäß einem Standard nach Bluetooth,WiFi, NFC (Near Field Communication) oder RFID (Radio Frequency Identification).

Bevorzugt kann der Schritt des Ausgebens des Hygienefluids durch die Kalibriervorrichtung initialisiert werden, insbesondere durch eine Nachricht, die über die selbe Schnittstelle gesandt wird, über die auch der Kalibrierwert übertragen wird. Dies verhindert insbesondere das unbefugte Starten eines Kalibriervorgangs durch Personen, die über keine Kalibriervorrichtung verfügen.

In einer besonders bevorzugten Ausführungsform ist der Spender dazu ausgebildet, zwei unterschiedliche Mengen an Hygienefluid auszugeben, einmal eine Normalausgabemenge und einmal eine Kalibrierausgabemenge, welche größer ist als die Normalausgabemenge des Spenders. In dieser Ausführungsform wird der Kalibrierwert nach dem Hinterlegen sowohl zur Einstellung der weiteren Kalibrierausgabemenge als auch der weiteren Normalausgabemenge angewandt. Um zu wählen, ob der Spender eine Normalausgabemenge oder eine Kalibrierausgabemenge ausgeben soll, kann am Spender beispielsweise ein mechanischer oder elektromechanischer Schalter vorgesehen sein oder eine entsprechende Nachricht von der Kalibriervorrichtung an den Spender gesandt werden.

In einem zweiten Aspekt betrifft die Erfindung ein System bestehend aus einem Spender und einer Kalibriervorrichtung gemäß Anspruch 10.

In einem weiteren Aspekt betrifft diese Offenlegung eine nicht beanspruchte Kalibriervorrichtung zum Kalibrieren einer Ausgabemenge eines Spenders, der dazu ausgebildet ist, nach einer Betätigung ein Hygienefluid, bevorzugt ein Desinfektionsmittel, mit einer Ausgabemenge auszugeben, und der Mittel umfasst, die dazu ausgebildet sind, die Ausgabemenge zu verändern, wobei die Kalibriervorrichtung eine erste Datenübertragungseinheit umfasst und dazu ausgebildet ist, eine gemessene Menge zu empfangen, zu vergleichen, ob die gemessene Menge mit einer Referenzmenge übereinstimmt, einen Kalibrierwert zu ermitteln, wenn die gemessene Menge nicht mit der Referenzmenge übereinstimmt, und den Kalibrierwert mittels der ersten Datenübertragungseinheit zum Kalibrieren an den Spender zu senden.

Bevorzugt ist die erste Datenübertragungseinheit zur Kurzreichweitenkommunikation mit der Kalibriervorrichtung ausgebildet. Weiters bevorzugt ist die erste Datenübertragungseinheit dazu ausgebildet, nach einem Bluetooth-Standard, einem WiFi-Standard, einem NFC-Standard oder einem RFID-Standard zu arbeiten.

In einem weiteren Aspekt betrifft diese Offenlegung einen nicht beanspruchten Spender, der dazu ausgebildet ist, nach einer Betätigung ein Hygienefluid, bevorzugt ein Desinfektionsmittel, mit einer Ausgabemenge auszugeben, und der Mittel umfasst, die dazu ausgebildet sind, die Ausgabemenge zu verändern, wobei der Spender eine zweite Datenübertragungseinheit umfasst, die dazu ausgebildet ist, einen Kalibrierwert von einer Kalibriervorrichtung zu empfangen und den Kalibrierwert im Spender zu hinterlegen, und wobei die genannten Mittel dazu ausgebildet sind, den Kalibrierwert bei der weiteren Ausgabe des Hygienefluids anzuwenden, um die Ausgabemenge des Spenders einzustellen.

Bevorzugt ist die zweite Datenübertragungseinheit zur Kurzreichweitenkommunikation mit dem Spender ausgebildet. Weiters bevorzugt ist die zweite Datenübertragungseinheit dazu ausgebildet, nach einem Bluetooth-Standard, einem WiFi-Standard, einem NFC-Standard oder einem RFID-Standard zu arbeiten.

Der Spender und die Kalibriervorrichtung des beanspruchten Systems weisen dieselben Vorteile auf und können in denselben Ausführungsvarianten ausgeführt werden, wie sie oben für das erfindungsgemäße Verfahren erläutert sind.

Vorteilhafte und nicht einschränkende Ausführungsformen der Erfindung werden nachfolgend anhand der Zeichnungen näher erläutert.
Figur 1 zeigt einen Spender zur Ausgabe eines Hygienefluids.
Figur 2 zeigt einen Spender, einen Messbehälter und eine Kalibriervorrichtung zur Durchführung des erfindungsgemäßen Verfahrens.

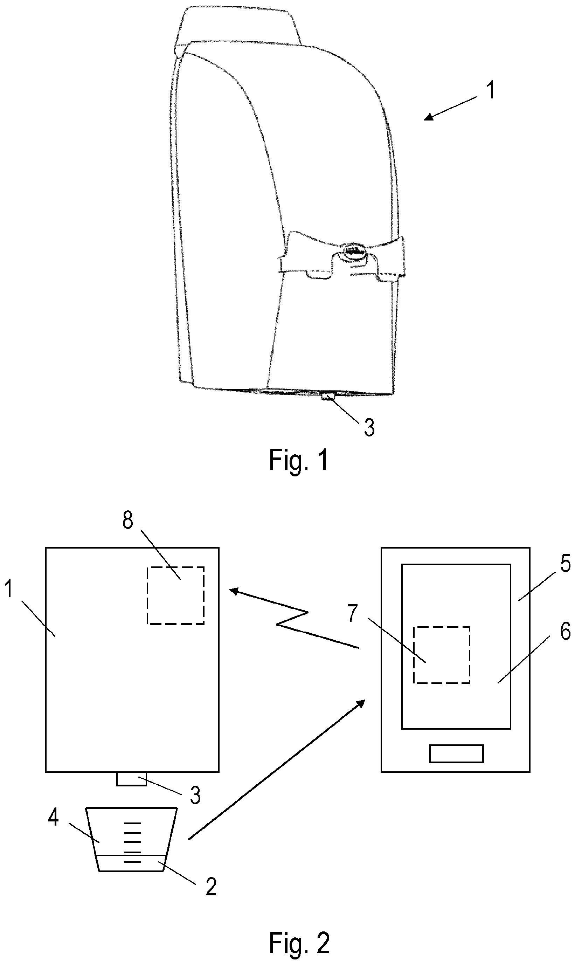

Figur 1 zeigt einen Spender 1 zur Ausgabe eines Hygienefluids 2 (Figur 2), beispielsweise eines Desinfektionsmittels, einer Seife oder einer Schaumseife, aus einer Auslassöffnung 3. Der Spender 1 ist derart ausgebildet, dass er nach einer Betätigung das Hygienefluid 2 in einer vorbestimmten Ausgabemenge ausgibt, um diese zu portionieren. Zu diesem Zweck kann der Spender 1 beispielsweise zumindest eine Pumpe umfassen, die das Hygienefluid 2 ausgibt. Die Pumpe kann insbesondere durch einen Bewegungssensor oder einen elektromechanischen Schalter aktiviert werden, wobei der Spender 1 nach dem Aktivieren der Pumpe eine Menge an Hygienefluid 2 ausgibt, die im Folgenden als Ausgabemenge bezeichnet wird. Beispielsweise kann die Pumpe über einen vorbestimmten Zeitraum elektromechanisch angesteuert werden, sodass dieser Zeitraum zusammen mit einer Durchflussrate die Ausgabemenge bestimmt. Der Begriff "Menge" kann hierin als Volumen oder Masse verstanden werden. Eine Umrechnung von Masse auf Volumen oder umgekehrt kann zu jeder Zeit über die im Wesentliche konstante Dichte des Hygienefluids 2 erfolgen. Wird die Pumpe bzw. der Spender 1 handbetätigt, beispielsweise durch einen mechanischen Hebel, wird als Ausgabemenge des Hygienefluids 2 jene Menge an Hygienefluid 2 bezeichnet, die beispielsweise nach einer vollständigen Hublänge des genannten Hebels aus dem Spender 1 ausgegeben wird.

Die Ausgabemenge, welche der Spender 1 ausgeben soll, ist ein Sollwert und kann prinzipiell frei gewählt werden. Dieser Sollwert kann beispielsweise vom eingesetzten Hygienefluid 2 und vom Einsatzzweck abhängig sein. Beispielsweise ist für konzentrierte Seife eine geringere Ausgabemenge notwendig als für ein Desinfektionsmittel, welches in einer alkoholischen Lösung vorliegen kann. Je nach Ausführungsform kann vorgesehen werden, dass der Sollwert der Ausgabemenge zwischen 0,1 ml und 100 ml liegt, bevorzugt zwischen 0,5 ml und 30 ml.

Aufgrund von Verstopfungen im Spender 1 und anderweitigen Fehljustierungen der Pumpe oder anderen Elementen des Spenders 1 kommt es im Lauf der Zeit zu einer Veränderung der tatsächlich aus dem Spender 1 ausgegebenen Ausgabemenge an Hygienefluid 2, sodass eine zur gewünschten Ausgabemenge (Sollwert) unterschiedliche tatsächliche Ausgabemenge aus dem Spender 1 ausgegeben wird, welche somit einen Istwert darstellt.

Um die tatsächliche Ausgabemenge, d.h. den Istwert, einzustellen und an die gewünschte Ausgabemenge, d.h. an den Sollwert, anzunähern, ist der Spender 1 mit Mitteln ausgestattet, die es ermöglichen, dass die Ausgabemenge aus dem Spender 1 verändert werden kann. Diese Mittel können beispielsweise eine in der Pumpe angeordnete Einrichtung mit veränderlichem Durchmesser umfassen, sodass die Durchflussrate der Pumpe angepasst wird. Alternativ oder zusätzlich könnten die Mittel die Ausgabezeit des Hygienefluids 2 steuern, sodass das Hygienefluid 2 über einen im Wesentlichen frei wählbaren Zeitraum aus dem Spender 1 ausgegeben wird. Die genannten Mittel sind in der Regel nicht frei zugänglich, da diese nicht von unautorisierten Personen betätigt werden sollen.

Erfindungsgemäß wird daher das im Folgenden anhand von Figur 2 beschriebene Verfahren eingesetzt, mittels welchem die Ausgabemenge des Spenders 1 kalibriert werden kann.

In einem vorbereitenden Schritt werden ein Messbehälter 4 und eine Kalibriervorrichtung 5 bereitgestellt. Die Kalibriervorrichtung 5 kann eine Eingabevorrichtung 6 für die im Folgenden beschriebenen Zwecke aufweisen. Überdies ist die Kalibriervorrichtung 5 mit einer ersten Datenübertragungseinheit 7 ausgestattet, die Nachrichten an eine zweite Datenübertragungseinheit 8 des Spenders 1 sendet. Bevorzugt sind die ersten und zweiten Datenübertragungseinheiten 7, 8 als Sendeempfänger ausgebildet, um eine bidirektionale Kommunikation zu ermöglichen, wobei je nach Anwendungsfall auch vorgesehen sein kann, dass die erste Datenübertragungseinheit 7 nur Daten an die zweite Datenübertragungseinheit 8 sendet, ohne Nachrichten von dieser zu empfangen.

Die Kalibriervorrichtung 5 und der Spender 1 können beispielsweise über eine Kurzreichweitenkommunikation, beispielsweise gemäß einem Standard nach Bluetooth, WiFi, NFC (Near Field Communication) oder RFID (Radio Frequency Identification), und/oder über ein zelluläres Netzwerk wie ein Mobilfunknetzwerk kommunizieren.

Alternativ oder zusätzlich könnte eine kabelgebundene Schnittstelle vorgesehen sein, um eine Kommunikation zwischen Spender 1 und Kalibriervorrichtung 5 zu ermöglichen.

In der in Figur 2 dargestellten Ausführungsform ist die Kalibriervorrichtung 5 ein Mobiltelefon, auf dem eine Applikation gespeichert ist, welche Funktionen wie die Eingabemöglichkeit und die Kommunikation mit dem Spender 1 ermöglicht. In dieser Ausführungsform ist die genannte Eingabevorrichtung 6 ein Touchscreen, könnte jedoch auch eine Tastatur, eine Sprachsteuerung oder eine andere Eingabemöglichkeit sein. Alternativ zu der Ausführungsform als Mobiltelefon könnte die Kalibriervorrichtung 5 jedoch auch als dediziertes Kalibriergerät ausgebildet sein.

In einem ersten Schritt des erfindungsgemäßen Verfahrens wird Hygienefluid 2 aus dem Spender 1 in den Messbehälter 4 ausgegeben, beispielsweise indem ein Bewegungssensor ausgelöst, ein manuell betätigbarer elektromechanischer Schalter bedient oder ein Hebel gedrückt wird. Alternativ oder zusätzlich könnte jedoch auch von der Kalibriervorrichtung 5 eine Nachricht an den Spender 1 gesandt werden, die den Spender 1 zur Ausgabe des Hygienefluids 2 ansteuert. Somit kann das Kalibrierverfahren auch von der Kalibriervorrichtung 5 initialisiert werden.

Um die Menge an Hygienefluid 2 im Messbehälter 4 zu messen, kann beispielsweise entweder das Volumen des Hygienefluids 2 im Messbehälter 4 oder die Masse des Hygienefluids 2 im Messbehälter 4 gemessen werden, was auf unterschiedlichste Arten durchgeführt werden kann.

Soll das Volumen an Hygienefluid 2 im Messbehälter 4 gemessen werden, kann beispielsweise ein durchsichtiger Messbehälter mit Füllstandsmarkierungen eingesetzt werden, sodass das Volumen optisch bestimmt werden kann. Der Messbehälter 4 könnte auch jeder andere Messbehälter 4 sein, der einer Person das Bestimmen der in den Messbehälter 4 abgegebenen Menge an Hygienefluid 2 ermöglicht. Auch könnte der Messbehälter 4 eine digitale Anzeige umfassen, die die im Messbehälter 4 befindliche Menge an Hygienefluid 2 anzeigt, beispielsweise wenn der Messbehälter 4 ein Teil einer digitalen Waage zum Messen des Gewichts an Hygienefluid 2 ist. In wiederum anderen Ausführungsformen könnte der Messbehälter 4 unmittelbar oder mittelbar mit der Kalibriervorrichtung 5 verbunden sein, um diesem die im Messbehälter 4 befindliche Menge an Hygienefluid 2 analog oder digital anzuzeigen.

Nachdem das Hygienefluid 2 in den Messbehälter 4 abgegeben wurde, wird die Menge (Istwert) des Hygienefluids 2 im Messbehälter 4 bestimmt. Dies kann beispielsweise durch eine optische Messung anhand der genannten Fülllinien am Messbehälter 4 oder durch ein voll- oder halbautomatisches Messen erfolgen, wenn der Messbehälter 4 eine hierzu geeignete Messeinrichtung umfasst.

Nachdem die Menge gemessen wurde, wird diese in die Kalibriervorrichtung 5 eingegeben, was beispielsweise über die Eingabevorrichtung 6 erfolgen kann. Umfasst der Messbehälter 4 selbst eine Messvorrichtung, kann diese der Kalibriervorrichtung 5 über eine Schnittstelle mitteilen.

Sobald die Kalibriervorrichtung 5 Kenntnis über die gemessene Menge hat, vergleicht diese, ob die gemessene Menge mit einer Referenzmenge übereinstimmt, d.h. ob der Istwert mit dem Sollwert übereinstimmt. Die Referenzmenge ist somit die gewünschte Ausgabemenge, die der Spender 1 ausgeben soll. Sollte der Istwert nicht mit dem Sollwert übereinstimmen, ermittelt die Kalibriervorrichtung 5 einen Kalibrierwert, um bei einer folgenden Betätigung des Spenders 1 eine Ausgabemenge an Hygienefluid 2 auszugeben, die der Referenzmenge entspricht.

Der Kalibrierwert, der von der Kalibriervorrichtung 5 an den Spender 1 gesandt werden soll, um diesen zu kalibrieren, kann entweder ein Relativwert oder ein Absolutwert sein. Ist beispielsweise die gemessene Menge doppelt so groß wie die gewünschte Menge, kann der Kalibrierwert als Relativwert 0,5 ermittelt werden, wenn der Kalibrierwert als multiplikativer Faktor im Spender 1 angewandt wird. Ist der Kalibriervorrichtung 5 vorab bekannt, dass der Spender 1 Hygienefluid 2 beispielsweise über einen Zeitraum von 1 Sekunde ausgegeben hat und die gemessene Ausgabemenge doppelt so groß wie die Referenzmenge ist, kann der Kalibrierwert als Absolutwert von 0,5 Sekunden ermittelt werden.

Nachdem die Kalibriervorrichtung 5 den Kalibrierwert ermittelt hat, sendet diese den Kalibrierwert mittels seiner ersten Datenübertragungseinheit 7 an die zweite Datenübertragungseinheit 8 des Spenders 1. Im Spender 1 wird der Kalibrierwert hinterlegt, sodass der Kalibrierwert bei der weiteren Ausgabe des Hygienefluids 2 angewandt wird, um die Ausgabemenge des Spenders 1 einzustellen. Das Hinterlegen des Kalibrierwertes kann beispielsweise durch Speichern in einem Speicher erfolgen, insbesondere dann, wenn die Steuerung der Pumpe des Spenders 1 elektromechanisch erfolgt. Der hinterlegte Kalibrierwert kann beispielsweise die Zeitspanne angeben, über welche die Pumpe das Hygienefluid 2 ausgibt. In anderen Ausführungsformen kann das Hinterlegen des Kalibrierwerts das unmittelbare Verstellen einer mechanischen Vorrichtung sein, beispielsweise indem ein Ventil geöffnet wird, um die Durchflussrate der Pumpe zu erhöhen.

Damit die Kalibriervorrichtung 5 mit dem Spender 1 über eine drahtlose Verbindung kommunizieren kann, kann in der Kalibriervorrichtung 5 eine Adresse des jeweiligen Spenders 1 vorbekannt sein. Wenn die Kalibriervorrichtung 5 und der Spender 1 über eine Kurzreichweitenkommunikation wie oben ausgeführt kommunizieren, kann die Kalibriervorrichtung 5 die Adresse des Spenders 1 auch über die Kurzreichweitenkommunikation ermitteln. Alternativ könnte jedoch auch eine Adresse auf dem Spender 1 aufgedruckt sein, sodass der Benutzer der Kalibriervorrichtung 5 die Adresse vom Spender ablesen kann und diese in die Kalibriervorrichtung 5 eingeben kann.

Die Kalibriervorrichtung 5 kann derart ausgebildet sein, dass diese einen Speicher umfasst, in welchem eine Liste mit Spendern 1 und zugehörigen Messwerten und/oder zugehörigen Kalibrierwerten geführt wird. Beispielsweise können auch Messwerte und/oder Kalibrierwerte aus vergangenen Messungen in dieser Liste gespeichert werden, sodass eine Analyse hinsichtlich der zeitlichen Veränderung der ausgegebenen Mengen durchgeführt werden kann. Die Liste kann auch dazu eingesetzt werden, zuerst Messwerte von vielen Spendern 1 aufzuzeichnen bzw. Kalibrierwerte von vielen Spendern 1 zu berechnen, wodurch die Spender 1 beispielsweise auch erst am Ende eines Tages kalibriert werden können. Dies kann beispielsweise nützlich sein, wenn die Kalibriervorrichtung 5 nicht unmittelbar mit den Spendern 1 kommunizieren kann. Beispielsweise könnten die Spender 1 über ein kabelgebundenes LAN-Netzwerk miteinander verbunden sein und die Kalibriervorrichtung 5 kalibriert alle Spender 1 nach der Ermittlung der Messwerte bzw. Kalibrierwerte, wenn die Kalibriervorrichtung 5 mit dem LAN-Netzwerk verbunden ist.

Überdies können Verschlüsselungsverfahren bei der Kommunikation zwischen Kalibriervorrichtung 5 und Spender 1 eingesetzt werden. Insbesondere kann der Kalibrierwert verschlüsselt von der Kalibriervorrichtung 5 an den Spender 1 gesandt werden. Alternativ oder zusätzlich kann als Sicherheitsvorkehrung gegen das unbefugte Kalibrieren des Spenders 1 vorgesehen sein, dass sich der Benutzer der Kalibriervorrichtung 5 vor der Inbetriebnahme auf der Kalibriervorrichtung 5 verifizieren muss.

Das oben beschriebene Verfahren kann bei Spendern 1 eingesetzt werden, die dazu ausgebildet sind, nur eine gewünschte Ausgabemenge auszugeben. In diesen Fällen ist die gewünschte Ausgabemenge eine Normalausgabemenge, d.h. jene Menge, die beispielswiese für die Desinfektion der Hände eingesetzt wird. In dieser Ausführungsform wird die vom Spender 1 ausgegebene Ausgabemenge unmittelbar gemessen und kalibriert.

Alternativ könnte der Spender 1 zwei verschiedene Ausgabemengen aufweisen, eine Normalausgabemenge und eine Kalibrierausgabemenge. Die Normalausgabemenge ist jene Menge, welche für den Normalbetrieb wie beispielswiese die Desinfektion der Hände eingesetzt wird, und die Kalibrierausgabemenge ist jene Menge, welche nur zum Zwecke der Kalibration ausgegeben wird. Die Kalibrierausgabemenge ist in der Regel größer als die Normalausgabemenge. Beispielsweise kann der Spender 1 zwei Knöpfe umfassen, um auszuwählen, ob der Spender 1 die Kalibrierausgabemenge oder die Normalausgabemenge ausgeben soll. Bevorzugt wird jedoch die Kalibrierausgabemenge nur dann ausgegeben, wenn der Spender von der Kalibriervorrichtung 5 eine entsprechende Nachricht erhält, um eine Fehlbedienung des Spenders durch ungeschulte Benutzer zu verhindern.

In der Ausführungsform, in der der Spender 1 auch eine Kalibrierausgabemenge ausgeben kann, wird der Kalibrierwert in Bezug auf die Kalibrierausgabemenge berechnet. Wird der Kalibrierwert als Relativwert ermittelt, kann dieser beispielsweise unmittelbar auch als Kalibrierwert für die Normalausgabemenge herangezogen werden. Alternativ könnte die Kalibriervorrichtung 5 aus dem Messwert bzw. dem Kalibrierwert der Kalibrierausgabemenge einen eigenen Kalibrierwert für die Normalausgabemenge ermitteln und diesen zusätzlich zum Kalibrierwert der Kalibrierausgabemenge an den Spender 1 senden.

In einer besonderen Ausführungsform kann die gemessene Ausgabemenge unmittelbar als Kalibrierwert herangezogen werden und an den Spender 1 gesandt werden, wobei eine allfällige weitere Umberechnung des Kalibrierwertes zur Anpassung der ausgegebenen Ausgabemenge im Spender 1 erfolgen kann.

## Patentansprüche

1. Verfahren zum Kalibrieren einer Ausgabemenge eines Spenders (1), wobei der Spender (1) nach einer Betätigung ein Hygienefluid (2), bevorzugt ein Desinfektionsmittel, mit der genannten Ausgabemenge ausgibt und der Mittel umfasst, die dazu ausgebildet sind, die Ausgabemenge zu verändern, wobei das Verfahren die folgenden Schritte umfasst:
• Ausgeben der Ausgabemenge an Hygienefluid (2) aus dem Spender (1) in einen Messbehälter (4);
• Messen der im Messbehälter (4) befindlichen Menge des Hygienefluids (2), bevorzugt durch Messen des Volumens des Hygienefluids (2) im Messbehälter (4) oder der Masse des Hygienefluids (2) im Messbehälter (4);
• Eingeben der gemessenen Menge in eine Kalibriervorrichtung (5);
• Vergleichen in der Kalibriervorrichtung (5), ob die gemessene Menge mit einer Referenzmenge übereinstimmt, und Ermitteln eines Kalibrierwertes, wenn die gemessene Menge nicht mit der Referenzmenge übereinstimmt;
• Senden des Kalibrierwertes von der Kalibriervorrichtung (5) an den Spender (1); und
• Hinterlegen des Kalibrierwertes im Spender (1), wobei die genannten Mittel den Kalibrierwert bei der weiteren Ausgabe des Hygienefluids (2) anwenden, um die Ausgabemenge des Spenders (1) einzustellen.

2. Verfahren nach Anspruch 1, wobei die Kalibriervorrichtung (5) durch die Kombination aus einem Mobiltelefon und einer Applikation gebildet ist, wobei die Applikation die Schritte des Vergleichens und Sendens durchführt.

3. Verfahren nach Anspruch 1 oder 2, wobei in der Kalibriervorrichtung (5) eine Adresse des Spenders (1) gespeichert ist, an die der Kalibrierwert versandt wird.

4. Verfahren nach einem der Ansprüche 1 bis 3, wobei die Kalibriervorrichtung (5) die Adresse des Spenders (1), an welche der Kalibrierwert versandt werden soll, vom Spender (1) ausliest.

5. Verfahren nach einem der Ansprüche 1 bis 4, wobei das Verändern der Ausgabemenge durch Erhöhen oder Reduzieren einer Ausgabezeit des Hygienefluids (2) aus dem Spender (1) gemäß dem Kalibrierwert erfolgt.

6. Verfahren nach einem der Ansprüche 1 bis 5, wobei der Schritt des Ausgebens des Hygienefluids (2) durch die Kalibriervorrichtung (5) initialisiert wird.

7. Verfahren nach einem der Ansprüche 1 bis 6, wobei der Kalibrierwert kabellos von der Kalibriervorrichtung (10) an den Spender (1) übertragen wird.

8. Verfahren nach einem der Ansprüche 1 bis 7, wobei der Kalibrierwert verschlüsselt von der Kalibriervorrichtung (5) an den Spender (1) gesandt wird.

9. Verfahren nach einem der Ansprüche 1 bis 8, wobei bei dem Schritt des Ausgebens eine Kalibrierausgabemenge des Hygienefluids (2) ausgegeben wird, welche größer ist als eine Normalausgabemenge des Spenders (1), wobei der Kalibrierwert nach dem Hinterlegen des Kalibrierwerts im Spender (1) sowohl zur Einstellung der weiteren Kalibrierausgabemenge als auch der weiteren Normalausgabemenge angewandt wird.

10. System bestehend aus Spender (1) und Kalibriervorrichtung (5) , wobei der Spender (1) dazu ausgebildet ist, nach einer Betätigung ein Hygienefluid (2), bevorzugt ein Desinfektionsmittel, mit einer Ausgabemenge auszugeben, und der Spender (1) Mittel umfasst, die dazu ausgebildet sind, die Ausgabemenge zu verändern, wobei die Kalibriervorrichtung (5) eine erste Datenübertragungseinheit (7) umfasst und der Spender (1) eine zweite Datenübertragungseinheit (8) umfasst, wobei die Kalibriervorrichtung (5) dazu ausgebildet ist, eine gemessene Menge zu empfangen, zu vergleichen, ob die gemessene Menge mit einer Referenzmenge übereinstimmt, und einen Kalibrierwert zu ermitteln, wenn die gemessene Menge nicht mit der Referenzmenge übereinstimmt, und den Kalibrierwert mittels der ersten Datenübertragungseinheit (7) zum Kalibrieren die zweite Datenübertragungseinheit (8) des Spenders (1) zu senden, wobei die zweite Datenübertragungseinheit (8) dazu ausgebildet ist, den Kalibrierwert von der ersten Datenübertragungseinheit (7) zu empfangen und den Kalibrierwert im Spender (1) zu hinterlegen, und wobei die genannten Mittel des Spenders (1) dazu ausgebildet sind, den Kalibrierwert bei der weiteren Ausgabe des Hygienefluids (2) anzuwenden, um die Ausgabemenge des Spenders (1) einzustellen.

11. System nach Anspruch 10, wobei die erste und zweite Datenübertragungseinheit (7, 8) zur Kurzreichweitenkommunikation untereinander ausgebildet sind.

12. System nach Anspruch 11, wobei die erste und zweite Datenübertragungseinheit (7, 8) dazu ausgebildet sind, nach einem Bluetooth-Standard, einem WiFi-Standard, einem NFC-Standard oder einem RFID-Standard zu arbeiten.

## Claims

1. A method for calibrating an output quantity of a dispenser (1), the dispenser (1), after activation, dispensing a hygiene fluid (2), preferably a disinfectant, with said output quantity and comprising means configured to change the output quantity, wherein the method comprises the following steps:
• dispensing the output quantity of hygiene fluid (2) from the dispenser (1) into a measuring container (4);
• measuring the quantity of hygiene fluid (2) present in the measuring container (4), preferably by measuring the volume of the hygiene fluid (2) in the measuring container (4) or the mass of the hygiene fluid (2) in the measuring container (4);
• introducing the measured amount into a calibration device (5);
• comparing, in the calibration device (5), whether the measured amount corresponds to a reference amount and determining a calibration value if the measuring amount does not correspond to the reference amount;
• sending the calibration value from the calibration device (5) to the dispenser (1); and
• storing the calibration value in the dispenser (1), wherein said means use the calibration value for further outputs of the hygiene fluid (2) in order to adjust the output quantity of the dispenser (1).

2. The method of claim 1, wherein the calibration device (5) is formed by a combination of a mobile phone and an application, wherein the application carries out the steps of comparing and sending.

3. The method of claim 1 or 2, wherein an address of the dispenser (1) to which the calibration value is sent is stored in the calibration device (5).

4. The method of any one of claims 1 to 3, wherein the calibration device (5) reads out the address of the dispenser (1) to which the calibration value is to be send from the dispenser (1).

5. The method of any one of claims 1 to 4, wherein changing the output quantity is achieved by increasing or reducing a dispensing time of the hygiene fluid (2) from the dispenser (1) according to the calibration value.

6. The method of any one of claims 1 to 5, wherein the step of dispensing the hygiene fluid (2) is initialized via the calibration device (5).

7. The method of any one of claims 1 to 6, wherein the calibration value is transmitted wirelessly from the calibration device (10) to the dispenser (1).

8. The method of any one of claims 1 to 7, wherein the calibration value is sent from the calibration device (5) to the dispenser (1) in an encrypted form.

9. The method of any one of claims 1 to 8, wherein the step of dispensing comprises dispensing a calibration output quantity of the hygiene fluid (2) that is larger than a normal output quantity of the dispenser (1), wherein after storing the calibration value in the dispenser (1), the calibration value is used for adjusting the further calibration output quantity as well as the further normal output quantity.

10. A system consisting of dispenser (1) and calibration device (5), wherein the dispenser (1) is configured to, after activation, dispense a hygiene fluid (2), preferably a disinfectant, with an output quantity and the dispenser (1) comprises means configured to change the output quantity, wherein the calibration device (5) comprises a first data transmission unit (7) and the dispenser (1) comprises a second data transmission unit (8), wherein the calibration device (5) is configured to receive a measured amount, to compare whether the measured amount corresponds to a reference amount, and to determine a calibration value if the measured amount does not correspond to the reference amount, and to send the calibration value by means of the first data transmission unit (7) for calibrating to the second data transmission unit (8) of the dispenser (1), wherein the second data transmission unit (8) is configured to receive the calibration value from the first data transmission unit (7) and to store the calibration value in the dispenser (1), and wherein said means of the dispenser (1) are configured to use the calibration value for further output of the hygiene fluid (2) in order to adjust the output quantity of the dispenser (1).

11. The system of claim 10, wherein the first and second data transmission units (7, 8) are designed for short-range communication with each other.

12. The system of claim 11, wherein the first and second data transmission units (7, 8) are designed to work according to a Bluetooth standard, a WiFi standard, an NFC standard or an RFID standard.

## Revendications

1. Procédé d'étalonnage d'une quantité d'émission provenant d'un distributeur (1), selon lequel le distributeur (1) émet, après avoir été activé, un fluide hygiénique (2), de préférence un produit désinfectant, dans la quantité d'émission mentionnée et comprend des moyens qui sont conçus pour modifier la quantité d'émission, lequel procédé comprend les étapes suivantes :
- émission de la quantité d'émission de fluide hygiénique (2) du distributeur (1) dans un récipient de mesure (4),
- mesure de la quantité de fluide hygiénique (2) se trouvant dans le récipient de mesure (4), de préférence en mesurant le volume de fluide hygiénique (2) dans le récipient de mesure (4) ou la masse de fluide hygiénique (2) dans le récipient de mesure (4),
- entrée de la quantité mesurée dans un dispositif d'étalonnage (5),
- comparaison dans le dispositif d'étalonnage (5) de la quantité mesurée avec une quantité de référence et détermination d'une valeur d'étalonnage si la quantité mesurée ne coïncide pas avec la quantité de référence,
- envoi de la valeur d'étalonnage par le dispositif d'étalonnage (5) au distributeur (1) et
- enregistrement de la valeur d'étalonnage dans le distributeur (1), les moyens mentionnés appliquant la valeur d'étalonnage lors de l'émission ultérieure de fluide hygiénique (2) pour régler la quantité d'émission du distributeur (1).

2. Procédé selon la revendication 1, selon lequel le dispositif d'étalonnage (5) est constitué par la combinaison d'un téléphone mobile et d'une application, l'application exécutant les étapes de comparaison et d'envoi.

3. Procédé selon la revendication 1 ou 2, selon lequel une adresse du distributeur (1) à laquelle la valeur d'étalonnage est envoyée est enregistrée dans le dispositif d'étalonnage (5).

4. Procédé selon une des revendications 1 à 3, selon lequel le dispositif d'étalonnage (5) lit à partir du distributeur (1) l'adresse du distributeur (1) à laquelle la valeur d'étalonnage doit être envoyée.

5. Procédé selon une des revendications 1 à 4, selon lequel la modification de la quantité d'émission se fait en augmentant ou en réduisant un temps d'émission du fluide hygiénique (2) par le distributeur (1) selon la valeur d'étalonnage.

6. Procédé selon une des revendications 1 à 5, selon lequel l'étape d'émission du fluide hygiénique (2) est initiée par le dispositif d'étalonnage (5).

7. Procédé selon une des revendications 1 à 6, selon lequel la valeur d'étalonnage est transmise sans fil par le dispositif d'étalonnage (10) au distributeur (1).

8. Procédé selon une des revendications 1 à 7, selon lequel la valeur d'étalonnage est envoyée codée par le dispositif d'étalonnage (5) au distributeur (1).

9. Procédé selon une des revendications 1 à 8, selon lequel, lors de l'étape d'émission est émise une quantité d'émission d'étalonnage du fluide hygiénique (2) qui est supérieure à une quantité d'émission normale du distributeur (1), la valeur d'étalonnage étant appliquée après l'enregistrement de la valeur d'étalonnage dans le distributeur (1) pour régler aussi bien la quantité d'émission d'étalonnage ultérieure que la quantité d'émission normale ultérieure.

10. Système constitué du distributeur (1) et du dispositif d'étalonnage (5), dans lequel le distributeur (1) est configuré pour émettre, après avoir été activé, un fluide hygiénique (2), de préférence un produit désinfectant, dans une quantité d'émission et le distributeur (1) comprend des moyens qui sont conçus pour modifier la quantité d'émission, dans lequel le dispositif d'étalonnage (5) comprend une première unité de transmission de données (7) et le distributeur (1) comprend une deuxième unité de transmission de données (8), dans lequel le dispositif d'étalonnage (5) est configuré pour recevoir une quantité mesurée, pour comparer la quantité mesurée avec une quantité de référence, et pour déterminer une valeur d'étalonnage si la quantité mesurée ne coïncide pas avec la quantité de référence et pour envoyer la valeur d'étalonnage au moyen de la première unité de transmission de données (7) pour étalonner à la deuxième unité de transmission de données (8) du distributeur (1), dans lequel la deuxième unité de transmission de données (8) est configurée pour recevoir la valeur d'étalonnage de la première unité de transmission de données (7) et pour enregistrer la valeur d'étalonnage dans le distributeur (1), et dans lequel les moyens mentionnés du distributeur (1) sont configurés pour appliquer la valeur d'étalonnage lors de l'émission ultérieure du fluide hygiénique (2) pour régler la quantité d'émission du distributeur (1).

11. Système selon la revendication 10, dans lequel les première et deuxième unités de transmission de données (7, 8) sont configurées pour communiquer entre elles à courte portée.

12. Système selon la revendication 11, dans lequel les première et deuxième unités de transmission de données (7, 8) sont configurées pour fonctionner selon une norme Bluetooth, une norme WiFi, une norme NFC ou une norme RFID.
